## Europäisches Patentamt

## European Patent Office

## Office européen des brevets

(19)

(11) Veröffentlichungsnummer: **0 087 778**
**B1**

(12) **EUROPÄISCHE PATENTSCHRIFT**

(45) Veröffentlichungstag der Patentschrift:
**11.05.88**

(51) Int. Cl.⁴: **B 04 C 9/00,** B 01 D 50/00

(21) Anmeldenummer: **83101868.4**

(22) Anmeldetag: **25.02.83**

(54) Zyklon zur Reinigung von Gas mit innerhalb des Zyklons angeordnetem Filter.

(30) Priorität: **27.02.82 DE 3207103**

(43) Veröffentlichungstag der Anmeldung:
**07.09.83 Patentblatt 83/36**

(45) Bekanntmachung des Hinweises auf die Patenterteilung:
**11.05.88 Patentblatt 88/19**

(84) Benannte Vertragsstaaten:
**AT**

(56) Entgegenhaltungen:
**DE - A - 2 441 848**
**DE - A - 2 635 292**
**FR - A - 741 480**
**FR - E - 89 288**
**GB - A - 2 044 639**
**US - A - 2 943 698**
**US - A - 3 353 340**
**US - A - 3 901 670**

**DERWENT PUBLICATIONS, Woche C05, 12. März 1980**

(73) Patentinhaber: **Kernforschungsanlage Jülich Gesellschaft mit beschränkter Haftung, Postfach 1913, D-5170 Jülich 1 (DE)**

(72) Erfinder: **Simmel, Lothar, Am Vogeldriesch 1b, D-5172 Linnich-Tetz (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Zyklon zur Reinigung von Gas, das als Verunreinigungen Feststoffpartikeln enthält, mit einem sich innerhalb des Zyklons mit Abstand von dessen zylindrischer Zyklonwand axial zur Zyklonachse erstreckenden Filter, in dessen Innenraum ein Gasabzug für das den Filter durchsetzende Gas mündet, und mit einem den unteren Teil des Zyklons bildenden Staubsammler mit Gutabzug für die abgeschiedenen Verunreinigungen.

Zur Reinigung von Gasen von als Verunreinigungen mitgeführten Partikeln ist es bekannt, Zyklone mit nachgeschalteten Filtereinheiten einzusetzen, wobei im Zyklon die groben Teilchen, in der Filtereinheit die Feinanteile der Verunreinigungen zurückgehalten werden. Um kompakte Filtereinheiten zu schaffen, werden die von den zu reinigenden Gasen durchsetzten Filter unmittelbar im zentral in den Zyklon eingeführten Tauchrohr angeordnet, vgl. DE-A-2 836 772. In der DE-A-2 441 848 wird ein Zyklon mit einer Filtereinheit beschrieben, die in einem im Querschnitt vieleckig ausgebildeten Tauchrohr eingesetzt ist. Die Filtermatten sind im Inneren des nach unten offenen Tauchrohres eingesetzt, so dass die tangential in den Zyklon eintretenden Gase vor Zutritt zu den Filtermatten noch einmal umgelenkt werden. Die Form des Tauchrohres soll den Vorabscheidegrad im Zyklon verbessern. Die Filter setzen sich jedoch insbesondere in den von der Gasströmung nicht erfassten Bereichen im Innenraum des vieleckigen Tauchrohres rasch zu.

Um ein Zusetzen der Filtereinheiten zu vermindern, ist es aus der DE-A-2 635 292 bekannt, den unteren Teil des Tauchrohres als rotationssymmetrischen Filter auszubilden, wobei der Filter vom Zyklonstrom tangential umspült und vom zu reinigenden Gas – in etwa radialer Richtung – durchsetzt wird. Der Filter ist zum Abscheiden von Flüssigkeiten und Feststoffen aus einem gasförmigen Medium bestimmt. Beim Abscheiden von Feststoffen bilden sich auf den rotationssymmetrischen Filtern nicht erwünschte unsymmetrische Filterkuchenschichten aus.

Aufgabe der Erfindung ist es, eine Filtereinheit innerhalb eines Zyklons zu schaffen, die eine Regeneration und Selbstreinigung der Filterelemente während der Filtrationsphase ermöglicht und die einen im wesentlichen gleichbleibenden Filtergutbelag auf der von den zu reinigenden Gasen durchströmten Filteroberfläche aufweist.

Diese Aufgabe wird gemäss der Erfindung durch die in Patentanspruch 1 angegebene Ausbildung des Filters gelöst. Dabei wird für den Filterträger von der aus DE-A-2 441 848 bekannten prismatischen Tauchrohrform ausgegangen. Auf Seitenflächen des prismatisch geformten und am Boden geschlossenen Filterträgers, dessen Prismenachse parallel zur Zyklonachse angeordnet ist, sind Filtermatten befestigt, durch die hindurch die zu reinigenden Gase abgezogen werden. Zwischen den Filtermatten des Filterträgers und Zyklonwand entstehen Strömungsräume, die die Form von Zylinderabschnitten aufweisen und in die das in den Zyklon eingeführte Gas tangential einströmt. In den Strömungsräumen wird das Gas verwirbelt, wobei aus jedem Strömungsraum ein Teil des Gases durch die Filtermatten hindurch abgeführt wird. Das Gas tritt in die Strömungsräume durch zwischen den Prismenkanten und der Zyklonwand verbleibende Spalte ein. Diese Spalte sind jeweils so bemessen, dass im Verhältnis zu der vom Gas zu durchströmenden Oberfläche jeder Filtermatte geringe freie Strömungsquerschnitte verbleiben, um beim tangentialen Eintritt des zu reinigenden Gases in jeden Strömungsraum möglichst hohe Strömungsgeschwindigkeiten zu erzeugen. Der Zyklon weist deshalb einen Durchmesser auf, der nur wenig grösser ist als der doppelte radiale Abstand einer Prismenkante von der Prismenachse und im Spalt die Strömungsgeschwindigkeit des Gases im Verhältnis zur Durchtrittsgeschwindigkeit des Gases durch die Filtermatten etwa 5 bis 20fach höher ist. Hierdurch und durch das Umlenken des aus den Strömungsräumen durch die Filtermatten abziehenden Gases wird nicht nur die Vorreinigung des Gases begünstigt, es sorgen auch die sich bei dieser Strömungsführung auf der Oberfläche der Filtermatten bildenden Gaswirbel und die entstehende Druckverteilung für eine Selbstreinigung der Filtermatten und für eine Filterkuchenschicht, deren Dicke nach Ablauf einer ersten Betriebsphase über lange Betriebszeiten hinweg stationär bleibt. Es stellt sich eine gleichbleibende Filterqualität bei gleichbleibendem Druckverlust ein. Die im Zyklonraum abgeschiedenen Feststoffe sammeln sich im unteren Teil des Zyklons und werden von dort abgezogen.

Mit einem quaderförmigen Filterträger werden besonders günstige Verhältnisse für eine stationäre Ausbildung des Filterbelages geschaffen. Die durch Einsatz eines solchen Filterträgers ausgebildete Gasströmung führt nicht nur zu einer hohen Vorabscheidung von Verunreinigungen, es wird vielmehr auch ein verhältnismässig dünner Filterkuchen auf der Oberfläche der Filtermatte ausgebildet. Neben quaderförmigen Filterträgern sind jedoch je nach Zyklongrösse auch andere prismatisch geformte Filterträger geeignet, beispielsweise Filterträger mit drei, sechs oder acht Seitenflächen.

Um das Auswechseln der Filtermatten im Filterträger zu erleichtern, weist der Filterträger nach Patentanspruch 2 die Filtermatten kraftschlüssig am Filterträger befestigende Halterungen auf, in denen die Filtermatten in Richtung der Prismenachse verschiebbar sind. Die Halterungen sind nach Abheben eines Verschlusses zugänglich, so dass sich verbrauchte Filtermatten ohne Demontage des Filterträgers austauschen lassen.

Die Erfindung wird im folgenden anhand eines Ausführungsbeispieles, das in der Zeichnung schematisch wiedergegeben ist, näher erläutert. Es zeigen im einzelnen:

Fig. 1: Zyklon mit Filterträger im Längsschnitt,
Fig. 2: Querschnitt durch einen Zyklon nach Fig. 1 gemäss Schnittlinie II/II.

Die Zeichnung zeigt einen Zyklon 1 mit einem Filterträger 2, der im Zyklon statt eines Tauchrohres eingesetzt ist. Im Ausführungsbeispiel ist der Filterträger 2 quaderförmig ausgebildet. Filtermatten 3 sind auf vier Seitenflächen des Filterträgers angeordnet, sein Boden 4 ist gasdicht geschlossen. Der Filterträger 2 ist derart im Zyklon 1 angeordnet, dass zwischen seinen Prismenkanten 5 und Zyklonwand 6 Spalte 7 verbleiben, durch die das zu reinigende Gas, das über ein Zuführungsrohr 8 tangential in den Zyklon eingeführt wird, in zwischen Filtermatten 3 und Zyklonwand 6 gebildete Strömungsräume 9 einströmt. Die Strömungsräume 9 weisen die Form von Zylinderabschnitten auf. Ein kegelstumpfartiger Staubsammler 10 mit Gutabzug 11 schliesst den Zyklon nach unten ab. Das zu reinigende Gas wird durch die Filtermatten 3 hindurch von einem Gebläse 12 abgesaugt, das in einem Abzugsrohr 13 eingesetzt ist, durch das das gereinigte Gas in die Atmosphäre abströmt.

Wird zu reinigendes Gas in den Zyklon eingeleitet, so scheiden sich die Verunreinigungen infolge der auf sie einwirkenden Zentrifugalkräfte im Zyklonraum ab. Die Feststoffteilchen gleiten unter Einwirkung der Schwerkraft auf einer spiralförmigen Bahn zum Staubsammler 10. Im Spalt 7 weist das tangential in den Strömungsraum 9 einströmende Gas eine im Verhältnis zur Durchtrittsgeschwindigkeit des Gases durch die Filtermatten hohe Strömungsgeschwindigkeit auf. Der dem Gas im Spalt 7 zur Verfügung stehende Strömungsquerschnitt ist relativ zur vom Gas zu durchdringenden Oberfläche einer Filtermatte gering bemessen.

Die Anordnung der planen Filtermatten im Zyklon und die damit erreichte Strömungsführung des zu reinigenden Gases bewirken, dass im Strömungsraum 9 eine weitgehende Vorabscheidung der mitgeführten Feststoffteilchen eintritt. Darüberhinaus aber bildet sich auf der Filtermatte nur ein verhältnismässig dünner Filterkuchen. Es tritt ein Selbstreinigungseffekt ein. Filterqualität und Druckverlust bleiben während des Filtervorganges stabil.

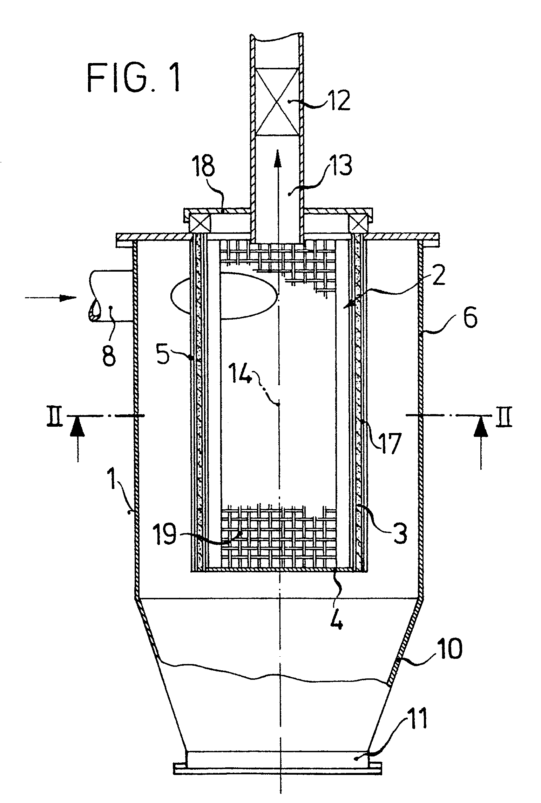

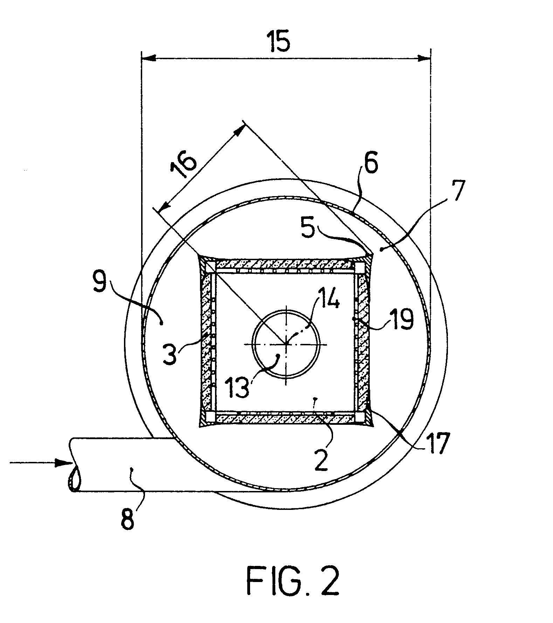

Im Ausführungsbeispiel ist der Filterträger 2 symmetrisch im Zyklon angeordnet, Zyklonachse und Prismenachse, die in Figuren 1 und 2 gemeinsam mit Bezugszeichen 14 markiert sind, fallen aufeinander. Um im Spalt 7 ausreichende Strömungsgeschwindigkeiten zu erzeugen, weist der Zyklon 1 einen Durchmesser 15 auf, der nur wenig grösser ist als der doppelte radiale Abstand 16 zwischen Prismenachse 14 und Prismenkante 5 des Filterträgers. Zyklon 1 und Filterträger 2 sind so ausgelegt, dass die Strömungsgeschwindigkeit für das Gas im Spalt 7 etwa 5 bis 20fach höher ist als die Anströmgeschwindigkeit des Gases auf der Oberfläche der Filtermatten. Die Prismenkanten des quaderförmigen Filterkörpers wirken beim Umströmen des Filterträgers wie Abrisskanten und verursachen Wirbelbildungen und Druckverteilungen über der Oberfläche der Filtermatte, die zu einem über lange Betriebszeiten hinweg gleich stark bleibenden Filterkuchen führen. Filterqualität und Druckverlust des Filters bleiben abgesehen von einer Anlaufphase konstant. Um günstige Strömungsverhältnisse im Zyklonraum zu erzeugen, um insbesondere den Druckverlusten beim Umströmen des Filterträgers Rechnung zu tragen, lässt sich der Filterträger auch asymmetrisch im Zyklon einsetzen. Die Prismenachse und die Zyklonachse, die parallel zueinander verlaufen, fallen dann nicht mehr aufeinander.

Statt eines quaderförmigen Filterträgers sind auch andere prismatisch ausgebildete Filterträger, beispielsweise Filterträger mit drei, sechs oder acht Seitenflächen einsetzbar. Es lassen sich unterschiedliche Filtermatten verwenden. Beispielsweise eignen sich für heisse Rauchgase feuerfeste Filtermatten. Auf solchen Filtermatten lässt sich gegebenenfalls gebildeter Filterkuchen innerhalb des Zyklons durch kurzzeitiges Einleiten überhitzter Rauchgase abbrennen.

Für die Filtermatten 3 weist der Filterträger 2 Halterungen 17 auf, in denen die Filtermatten 3 kraftschlüssig befestigt werden. Die Filtermatten lassen sich in den Halterungen in Richtung der Prismenachse 14 verschieben. Hierzu sind die Halterungen klemmenartig ausgeführt und nach Abheben eines staubdichten Deckels 18 von oben zugänglich. Die Filtermatten lassen sich aus den Halterungen nach unten in den Staubsammler 10 hinausdrücken und können über den Gutabzug 11 entfernt werden. Die frischen Filtermatten werden von oben in die Halterungen 17 eingeführt. Im Ausführungsbeispiel werden die planen Filtermatten 3 zur Stabilisierung im Filterträger von Maschendraht 19 gestützt. Die Filtermatten bestehen im Ausführungsbeispiel aus handelsüblichem, hochwarmfestem Filtermaterial, das bis zu ca. 1200 °C belastbar ist.

**Patentansprüche**

1. Zyklon (1) zur Reinigung von Gas, das als Verunreinigung Feststoffpartikeln enthält, mit einem sich innerhalb des Zyklons mit Abstand von dessen zylindrischer Zyklonwand (6) axial zur Zyklonachse (14) erstreckenden Filter, in dessen Innenraum ein Gasabzug (13) für das den Filter durchsetzende Gas mündet, und mit einem den unteren Teil des Zyklons bildenden Staubsammler (10) mit Gutabzug (11) für die abgeschiedenen Verunreinigungen, dadurch gekennzeichnet, dass ein prismatisch ausgebildeter Filterträger (2) mit geschlossenem Boden (4) im Zyklon (1) derart eingesetzt ist, dass Prismenachse und Zyklonachse (14) parallel verlaufen, dass auf Seitenflächen zwischen Prismenkanten (5) des Filterträgers (2) Filtermatten (3) befestigt sind, und dass der Zyklon (1) einen Durchmesser aufweist, der soviel grösser ist als der doppelte radiale Abstand (16) einer Prismenkante (5) von der Prismenachse (14), dass die Strömungsgeschwindigkeit des zu reinigenden Gases im Spalt (7) zwischen einer Prismenkante (5) und Zyklon (1) etwa 5 bis 20fach höher ist, als die Anströmgeschwindigkeit des Gases auf der Oberfläche einer Filtermatte (3).

2. Zyklon nach Anspruch 1, dadurch gekennzeichnet, dass der Filterträger (2) die Filtermatten (3) kraftschlüssig am Filterträger befestigende Halterungen (17) aufweist, in denen die Filtermatten (3) in Richtung der Prismenachse (14) verschiebbar sind.

## Claims

1. Cyclone (1) for the cleaning of gas, which contains solid particles as contaminant, with a filter in the cyclone, extending axially with respect to the cyclone axis (14) at a distance from its cylindrical cyclone wall (6), in the inside of which filter there opens a gas outlet (13) for the gas passing through the filter, and with a dust collector (10), forming the lower part of the cyclone, with material outlet (11) for the separated contaminants, characterized in that the prismatically designed filter carrier (2) with closed bottom (4) is fitted in the cyclone (1) in such a way that prism axis and cyclone axis (14) run parallel, in that filter mats (3) are fixed on side surfaces between prism edges (5) of the filter carrier (2), and in that the cyclone (1) has a diameter which is that much greater than the double radial distance (16) of one prism edge (5) from the prism axis (14) that the flow rate of the gas to be cleaned in the gap (7) between one prism edge (5) and cyclone (1) is approximately 5 to 20 times higher than the incoming flow rate of the gas on the surface of a filter mat (3).

2. Cyclone according to Claim 1, characterized in that the filter carrier (2) has brackets (17) frictionally fixed on the filter carrier, in which the filter mats (3) are displaceable in the direction of the prism axis (14).

## Revendications

1. Cyclone (1) d'épuration d'un gaz qui contient comme impureté des particules de matières solides, comprenant un filtre qui s'étend axialement par rapport à l'axe (14) du cyclone, à l'intérieur du cyclone et à distance de la paroi (6) cylindrique du cyclone, et à l'intérieur duquel débouche une évacuation (13) pour le gaz passant à travers le filtre, et un collecteur de poussière (10) formant la partie inférieure du cyclone et ayant une évacuation (11) pour les impuretés séparées, caractérisé en ce qu'un support de filtre (2) prismatique et à fond (4) fermé est introduit dans le cyclone (1) de manière que l'axe du prisme et l'axe (14) du cyclone soient parallèles, en ce que des toiles filtrantes (3) sont fixées sur les faces latérales comprises entre les arêtes (5) du prisme du support de filtre (2), et en ce que le cyclone (1) a un diamètre égal au double de la distance (16) radiale entre une arête (5) du prisme et l'axe (14) du prisme, en ce que la vitesse d'écoulement du gaz à épurer dans l'intervalle (7) compris entre une arête (5) du prisme et le cyclone (1) est de 5 à 20 fois plus grande que la vitesse d'afflux du gaz à la surface d'une toile filtrante (3).

2. Cyclone suivant la revendication 1, caractérisé en ce que le support de filtre (2) comporte des pièces de fixation (17), qui fixent positivement les toiles filtrantes (3) au support du filtre et dans lesquelles les toiles filtrantes (3) peuvent coulisser dans la direction de l'axe (14) du prisme.

FIG. 1

FIG. 2